# EUROPÄISCHE PATENTSCHRIFT

(11) **EP 1 086 012 B1**
(45) Veröffentlichungstag und Bekanntmachung des Hinweises auf die Patenterteilung: **02.05.2002**
(21) Anmeldenummer: 99929129.7
(22) Anmeldetag: 02.06.1999
(51) Int. Cl.: B62D 29/00, B62D 25/04, C22C 1/08

(54) **VERFAHREN ZUR HERSTELLUNG EINER VERSTÄRKUNG IN EINEM HOHLRAUM EINES KFZ-BAUTEILS**
METHOD FOR REINFORCING A CAVITY OF A MOTOR VEHICLE STRUCTURAL MEMBER
PROCEDE POUR RENFORCER LA CAVITE D'UN ELEMENT D'AUTOMOBILE

(30) Priorität: 09.06.1998 DE 19825603; 22.10.1998 DE 19848632
(43) Veröffentlichungstag der Anmeldung: 28.03.2001
(73) Patentinhaber: M.I.M. Hüttenwerke Duisburg Gesellschaft mit Beschränkter Haftung, 47249 Duisburg (DE)
(72) Erfinder: SCHNEIDER, Wolf-Dieter, D-45219 Kettwig (DE); Schwab, Bruno Dr., 45478 Mülheim/Ruhr (DE)
(74) Vertreter: Gesthuysen, von Rohr & Eggert
(86) Internationale Anmeldenummer: EP9903832
(87) Internationale Veröffentlichungsnummer: WO9964287

(56) Entgegenhaltungen:
- EP-A- 0 460 392
- EP-A- 0 915 007
- WO-A-92/03582
- DE-A- 2 362 292
- DE-A- 19 648 164
- DE-A- 19 651 197
- DE-A- 19 717 894
- GB-A- 2 295 993
- US-A- 3 790 365
- US-A- 3 797 873
- US-A- 3 873 392

## Beschreibung

Die Erfindung betrifft ein Verfahren zur Herstellung einer Verstärkung in einem Hohlraum eines vorzugsweise verzinkten Kfz-Bauteils, insbesondere einer A-Säule, B-Säule, einer C-Säule, einer D-Säule, eines Motorträgers, eines Heckträgers, eines Dachquerträgers, eines Dachholmes, eines Rahmenteils, eines Fahrwerksteils o. dgl., wobei der Hohlraum mit einem Metallschaum zumindest teilweise ausgeschäumt wird, so daß sich nach dem Erstarren eine aus dem Metallschaum bestehende Verstärkung in dem Hohlraum insbesondere zur Erhöhung der Knicksteifigkeit des Bauteils und/oder der Energieaufnahme des Bauteils und/oder zur Gewichtsreduzierung des Bauteils ergibt. Desweiteren betrifft die vorliegende Erfindung eine Trägerstruktur wie eine Schalttafel, einen Radioträger, ein Tür-Innenverkleidungsbauteil, eine Verstärkung für eine Haube oder Heckklappe, ein Sitzbauteil oder dergleichen, für ein Kfz-Bauteil, mit einem Grundkörper aus einem Metallschaum aus Zink oder einer Zinklegierung.

Bei Kfz-Bauteilen der vorgenannten Art, und insbesondere bei Pkw-Bauteilen, ist es wichtig, daß diese so ausgebildet sind, um Personenschäden bei Unfällen zu verhindern bzw. so gering wie möglich zu halten. Aus diesem Grunde werden die in der Regel aus Metall bestehenden Kfz-Bauteile verstärkt. Durch die Verstärkung soll die Knicksteifigkeit und die Energieaufnahme des betreffenden Kfz-Bauteils erhöht werden.

Gerade im PKW-Bereich besteht eine wesentliche Anforderung darin, daß Kfz-Bauteile, insbesondere wenn sie verstärkt sind, dennoch ein möglichst geringes Gewicht haben sollen. Darüber hinaus sollen die Herstellungskosten von verstärkten Bauteilen möglichst gering sein. Wichtig ist weiterhin, daß die verstärkten Kfz-Bauteile nicht korrodieren, wobei gleichzeitig sichergestellt sein muß, daß die Verstärkung im eingebauten Zustand nicht klappert oder knirscht.

Kfz-Bauteile der eingangs genannten Art werden in der Praxis derzeit dadurch verstärkt, daß aus Stahl bestehende Einsätze in die einzelnen Kfz-Bauteile eingeschweißt werden. Diese Stahleinsätze müssen, um in den Hohlraum des Bauteils passend eingesetzt und dort angeschweißt werden zu können, zunächst durch Tiefzieh- bzw. Umformvorgänge in die gewünschte Form gebracht werden. Insgesamt ist das Herstellen einer derartigen, aus Stahl bestehenden Verstärkung und das anschließende Anschweißen recht arbeitsaufwendig und kostenintensiv. Darüber hinaus erhöht sich durch die Stahl-Verstärkung das Gewicht des Kfz-Bauteils nicht unerheblich.

Trägerstrukturen werden in unterschiedlichen Bereichen innen und außen an einem Kraftfahrzeug eingesetzt. Je nach Einsatzzweck haben die Trägerstrukturen unterschiedliche Aufgaben und Anforderungen. In der Regel gehören hierzu jedenfalls hohe Steifigkeit, geringes Gewicht, hohe Formstabilität und Korrosionsunempfindlichkeit. Des weiteren besteht eine wesentliche Anforderung bei Trägerstrukturen darin, daß sie einen eher geringen Temperaturausdehnungskoeffizienten haben sollen. Bei hohen Temperaturausdehnungskoeffizienten von Trägerstrukturen müssen zu benachbarten Bauteilen große Spalte vorhanden sein, um die Längenausdehnung aufnehmen zu können. Aus funktionstechnischen und ästhetischen Gründen sind große Spalte jedoch nachteilig. Gefordert wird daher stets eine enge Toleranz der Spaltmaße.

Aus der DE - A - 196 48 164 ist bereits ein Verfahren zur Herstellung einer Verstärkung in einem Hohlraum eines Karosserieteils bekannt, wobei der Hohlraum mit einem Metallschaum ausgeschäumt ist. Bei dem Metallschaum handelt es sich um Aluminiumschaum. Aus Versteifungsgründen befindet sich im Aluminiumschaum ein Rahmen- oder Rohrelement. Die bekannte Verstärkung aus Aluminiumschaum zeichnet sich dadurch aus, daß sie über eine hohe Knicksteifigkeit und ein hohes Energieaufnahmevermögen verfügt. Im Hinblick auf die zuvor angesprochene wesentliche Anforderung des geringen Gewichts ist bei dem bekannten Verfahren Aluminium als Metall mit einem spezifischen Gewicht von etwa 2,7 verwendet worden. Ein vergleichbares Verfahren zur Herstellung einer Verstärkung in einem Hohlraum eines Kfz-Bauteils nach dem Oberbegriff des Anspruchs 1 ist bereits aus der GB - A - 2 295 993 bekannt.

Nachteilig bei dem bekannten Verfahren ist allerdings, daß das Aluminium eine relativ hohe Schmelztemperatur von etwa 660°C hat, was beim Aufschmelzen dieses Metalls im Hohlraum dazu führen kann, daß sich das Bauteil aufgrund der hohen Temperatur verzieht. Darüber hinaus kann es bei der zuvor genannten Schmelztemperatur von Aluminium bei verzinkten Bauteilen dazu kommen, daß sich die Zinkbeschichtung löst. Im übrigen ist das Korrosionsverhalten von Aluminium in Verbindung mit Stahlblech bzw. verzinktem Stahlblech nicht gut.

Im übrigen ist es aus der US - A - 3 797 873 sowie der US - A - 3 790 365 bekannt, Zinkschaum im Kraftfahrzeugbereich zu verwenden. Im übrigen ist es aus der US - A - 3790365 bekannt, eine Trägerstruktur für ein Kraftfahrzeugbauteil mit einem gegossenen Grundkörper aus Zinkschaum vorzusehen, der nicht in einen Hohlraum eingeschäumt ist, also eine Trägerstruktur nach dem Oberbegriff des Anspruchs 11.

Aus der DE 197 17 894 A geht ein Formling zur Herstellung von Metallschaum-Formkörpern hervor, der als Metallzink und als Treibmittel Metallhydride mit einem Anteil um 1 Gew.-% aufweist.

Aus der DE - A - 43 17 315 geht eine Verbundplatte mit zwei Deckschichten und einem Kern hervor. Die an die bekannte Verbundplatte gestellten Anforderungen bestehen darin, daß diese leicht verarbeitbar und insbesondere geformt, gebogen oder geknickt werden kann und dabei den Erfordernissen der Klassierung zu unbrennbaren Baustoffen und Bauteilen entspricht. Hierzu wird bei der bekannten Verbundplatte vorgeschlagen, daß der Kern aus einer Mischung von 50 bis 90 Gew.-% von Verbindungen des Kalziums und/oder Magnesiums der Reihe der Hydroxide und/oder Carbonate, 5 bis 47 Gew.-% Füllstoff und 3 bis 5 Gew.-% Bindemittel enthält. Die Deckschichten können aus folien-, band- oder plattenförmigem Material aus Kunststoff oder metallischen Materialien, wie unter anderem Zink oder Aluminium bestehen. Bevorzugt sind allerdings Aluminium und Aluminium-Legierungsdeckschichten.

Nach der Herstellung der Verbundplatte kann diese nach einer entsprechenden Bearbeitung in die erforderliche Trägerstruktur verarbeitet werden. Die Bearbeitung der Verbundplatte erfolgt durch Sägen, Fräsen oder Schneiden. Zur Herstellung komplexer dreidimensionaler Trägerstrukturen, wie sie beispielsweise im Innenbereich eines Kraftfahrzeugs benötigt werden, ist es erforderlich, die Verbundplatten zu verformen, wozu die Deckschichten auf der Innenseite mit einer oder mehreren Kerben oder Schnitten versehen werden müssen, um eine entsprechende Verformung zu ermöglichen.

Insgesamt ist die Herstellung der bekannten Trägerstruktur mit dem Kern und den beiden Deckschichten schon an sich aufwendig. Die Herstellung dreidimensionaler Trägerstrukturen ist mit zusätzlichem Aufwand verbunden, da hierzu ein Verformungsschritt der bekannten Verbundplatten erforderlich ist. Darüber hinaus lassen sich Trägerstrukturen, die aus dem bekannten Verbundplatten hergestellt worden sind, schlecht recyceln, da die bekannten Verbundplatten aus einer Mehrzahl unterschiedlicher Materialien bestehen.

Die der vorliegenden Erfindung zugrundeliegende Aufgabe besteht darin, für die Verstärkung eines Kfz-Bauteils eine Alternative zu Aluminiumschaum einzuführen, ohne daß das fertige Teil zu schwer wird.

Die zuvor hergeleitete Aufgabe ist erfindungsgemäß bei einem Verfahren der eingangs genannten Art dadurch gelöst, daß als Metall des Metallschaums Zink oder wenigstens eine Zink-Legierung verwendet wird und daß das Metall derart aufgeschäumt wird, daß sich eine Volumenvergrößerung des Metalls zum Metallschaum von wenigstens 1:8 ergibt.

Im Gegensatz zum Stand der Technik wird bei der Erfindung für den speziellen Anwendungsfall bei einem Kfz-Bauteil mit der besonderen Anforderung des geringen Gewichts nicht ein Metall mit einem sehr geringen Gewicht verwendet, sondern ein solches mit einem relativ hohen spezifischen Gewicht. Da das Baugruppengewicht gerade im Pkw-Fahrzeugbau eine besondere Bedeutung hat, erscheint Zink aus Ausgangsmaterial für den Metallschaum aufgrund seines relativ hohen spezifischen Gewichtes von 7,2, was damit fast 3 mal höher ist als das von Aluminium, grundsätzlich als ungeeignet.

Allerdings läßt sich bei der Herstellung des Zinkschaums eine Volumenvergrößerung von wenigstens 1:8 erzielen, während sich bei Aluminium in der Regel nur eine Volumenvergrößerung von 1:5 erzielen läßt. Durch diese Volumenvergrößerung läßt sich das höhere spezifische Gewicht von Zink gegenüber Aluminium jedenfalls teilweise kompensieren. Wesentlich ist aber auch, daß Zink eine vergleichsweise geringe Schmelztemperatur von etwa 419°C hat, so daß die Gefahr, daß sich das Bauteil beim Aufschmelzen des Zinks im Hohlraum verzieht, erheblich verringert ist. Gerade in Verbindung mit verzinkten Bauteilen ergeben sich außerdem weitere Vorteile. Bei dem Ausschäumungsprozeß wird das verzinkte Karosserieblech zunächst einmal nicht geschädigt. Der Zinkschaum geht im übrigen mit der verzinkten Oberfläche des Bauteils eine Verbindung ein, die für die Übertragung von Kräften und Momenten vorteilhaft ist. Bei direkt ausgeschäumten Bauteilen ist damit ein Klappern, Knarren oder eine ähnliche Geräuschbildung zwischen der Verstärkung und dem Bauteil ausgeschlossen.

Es sei an dieser Stelle darauf hingewiesen, daß unter dem Ausdruck "Metallschaum" sowohl ein schaumartiges Material mit im wesentlichen geschlossenen Zellen bzw. Poren als auch ein schwammartiges Material (Metallschwamm) mit im wesentlichen offenen Zellen bzw. Poren verstanden wird.

Obwohl die Erfindung bevorzugt im Kfz-Bereich eingesetzt werden kann, ist sie nicht auf den Kfz-Bereich an sich beschränkt. Letztlich läßt sich die Erfindung überall einsetzen, wo die gleichen oder jedenfalls ähnliche Anforderungen an Bauteile wie im Kfz-Bereich gestellt werden. Zu denken ist hier beispielsweise an die Verwendung bei Flugzeugen, Schienenfahrzeugen und Aufzügen.

Die zuvor angegebene Aufgabe ist bei einer Trägerstruktur der eingangs genannten Art erfindungsgemäß dadurch gelöst, daß das Metall mit einer Volumenvergrößerung zum Metallschaum von wenigstens 1:8 aufgeschäumt ist. Die erfindungsgemäße Ausgestaltung bietet eine Reihe von wesentlichen Vorteilen. Zunächst einmal besteht der Grundkörper lediglich aus einem einzigen Material, nämlich dem aufgeschäumten Metall, was sich in einfacher Weise recyceln läßt. Darüber hinaus bietet die geschäumte Trägerstruktur eine Reihe weiterer Vorteile. Ein Metallschaum verfügt über eine hohe Knicksteifigkeit und ein hohes Energieaufnahmevermögen. Außerdem hat eine aus Metallschaum bestehende Trägerstruktur ein extrem geringes Gewicht. Weiterhin besitzen Metallschäume einen sehr geringen Ausdehnungskoeffizienten.

Zwar ist es so, daß Metallschäume an sich grundsätzlich bereits seit Jahren bekannt sind. Auch ist die Verwendung von bestimmten Metallschäumen im Kraftfahrzeug-Bereich an sich bekannt, jedoch in Verbindung mit Karosserieteilen, um diese zu verstärken. So geht beispielsweise aus der eingangs genannten DE 196 48 164 A1 die Verwendung von Aluminiumschaum, der zur Verstärkung in einen Profilrahmenträger eines Kraftfahrzeugs eingeschäumt ist, hervor. Bei der vorliegenden Erfindung geht es aber nicht um ein verstärktes Kfz-Bauteil, in das ein Metallschaum eingeschäumt ist. Vorliegend geht es um eine Trägerstruktur mit einem Grundkörper, ohne daß dieser in den Hohlraum eines Kfz-Bauteils eingeschäumt ist. Es geht also um eine Trägerstruktur an sich, die als solche in ein Kraftfahrzeug eingebaut wird, und nicht um ein zu verstärkendes Kfz-Profilbauteil.

Hinsichtlich der Verwendung von Zink als Metall des Metallschaums ergeben sich die eingangs genannten Vorteile. Wie eingangs bereits ausgeführt worden ist, spielt im Kraftfahrzeug-Bereich das Baugruppengewicht bzw. das Gewicht eines bestimmten Bauteils eine erhebliche Rolle. Von daher erscheint Zink aus Ausgangsmaterial für den Metallschaum aufgrund seines relativ hohen spezifischen Gewichtes von 7,2 grundsätzlich als ungeeignet zur Verwendung im Kfz-Bereich. Allerdings läßt sich bei der Herstellung von Zinkschaum eine Volumenvergrößerung von wenigstens 1 : 8 erzielen, während sich beispielsweise bei Aluminium in der Regel nur eine Volumenvergrößerung von 1 : 5 erzielen läßt. Durch die vorgenannte Volumenvergrößerung läßt sich das höhere spezifische Gewicht von Zink gegenüber Aluminium jedenfalls teilweise kompensieren. Darüber hinaus hat ein Zinkschaum eine sehr gleichmäßige Porenstruktur und damit an jeder Stelle etwa die gleichen Festigkeits- und Energieaufnahmeeigenschaften. Dies ist bei einem Aluminiumschaum nicht der Fall. Darüber hinaus zeichnet sich Zink durch ein ausgezeichnetes Korrosionsverhalten in Verbindung mit Stahlblech bzw. verzinktem Stahlblech, an dem die Trägerstruktur möglicherweise zu befestigen ist, aus.

Im übrigen ist darauf hinzuweisen, daß die erfindungsgemäße Trägerstruktur grundsätzlich in allen Bereichen eingesetzt werden kann, in denen vergleichbare Anforderungen wie im Kraftfahrzeug-Bereich gestellt werden.

Obwohl es grundsätzlich möglich ist, Metallschaum durch Einblasen von Gasen zu erzeugen, ist es für den vorliegenden Anwendungsfall bevorzugt, zur Herstellung des Metallschaums ein Treibmittel zu verwenden. Bei dem Treibmittel sollte es sich vorzugsweise um ein Metallhydrid, wie Titanhydrid, Magnesiumhydrid und/oder Zirkoniumhydrid handeln. Um die zuvor genannte Volumenvergrößerung von wenigstens 1:8 zu erzielen, reichen bereits sehr geringe Mengen an Treibmittel zur Herstellung des erfindungsgemäßen Metallschaums aus. So kann der Anteil des Treibmittels zwischen 0, 5 und 3 Gew.-%, vorzugsweise bei etwa 1 Gew.-% liegen.

Obwohl es grundsätzlich möglich ist, die Energie zum Aufschmelzen des Metalls von außen, d.h. über oder durch das Material des Bauteils zuzuführen, ist bei einer bevorzugten Ausgestaltung vorgesehen, daß die Energie zum Aufschmelzen des Metalls über den Hohlraum und nicht über das Material des Bauteils zugeführt wird. Die Energieeinleitung in den Hohlraum erfolgt also von quasi "innen". Durch die Energieeinleitung von innen ist die Gefahr, daß sich das Kfz-Bauteil aufgrund der zum Aufschmelzen des Metalls auftretenden hohen Temperatur verzieht, erheblich verringert.

Die Energieeinleitung von innen kann durch verschiedene alternative Verfahren erfolgen. Eine Möglichkeit besteht in der elektrischen Erhitzung. Hierbei kann das Metall selbst in einen elektrischen Kreis integriert und an eine entsprechende Stromquelle angeschlossen sein. Des weiteren ist es möglich, eine elektrische Heizeinrichtung zu verwenden. Hierzu kann in dem Bauteil eine Heizwendel angeordnet werden, die zum Aufschmelzen des Metalls vorgesehen ist. Nach dem Aufschmelzen verbleibt die Heizwendel im Bauteil. Außerdem ist es möglich, einen bewegbaren Heizstab oder eine bewegbare Heizwendel zu verwenden, der bzw. die zum Aufschmelzen in das Bauteil hineinbewegt wird und während des Aufschmelzens bzw. der Bildung des Metallschaums aus dem Hohlraum herausgezogen wird. Bei einer alternativen Ausgestaltung wird der Hohlraum von einem heißen Gasstrom durchströmt, wobei das Metall entsprechend angeströmt wird. Bei einer anderen Möglichkeit ist eine Brenneinrichtung vorgesehen, bei der eine offene Flamme in den Hohlraum auf das Metall gerichtet wird. Des weiteren ist es möglich, eine Strahlungseinrichtung zu verwenden, bei der eine Wärmestrahlung abgegeben wird, die zum Aufschmelzen des Metalls führt.

Bei einer bevorzugten Ausgestaltung des erfindungsgemäßen Verfahrens ist vorgesehen, daß das Metall und das Treibmittel über wenigstens einen gemeinsamen, in fester Form vorliegenden Formling in den Hohlraum eingebracht bzw. eingelegt werden. Durch einen derartigen Formling, der sowohl das Metall als auch das Treibmittel aufweist, kann sichergestellt werden, daß für den betreffenden Hohlraum stets die richtige, d. h. genau vorgegebene Menge an Metall einerseits und Treibmittel andererseits zur Herstellung des erforderlichen Volumens an Metallschaum verwendet wird.

Besonders bevorzugt ist es, wenn zum Aufschmelzen des Formlings ein Schmelzmittel verwendet wird, das über ein Zündmittel gezündet wird. Günstig ist es dabei, daß das Schmelzmittel und das Zündmittel über den gemeinsamen Formling in den Hohlraum eingebracht werden.

Bei dem Schmelzmittel kann es sich entsprechend dem Goldschmit-Verfahren um eine Mischung aus Aluminium und Metalloxiden, insbesondere um Thermit ® handeln, das aus Aluminiumgrieß und pulverisiertem trockenen Eisenoxid besteht. Das Thermit ® zeichnet sich dadurch aus, daß es sich nach Entzündung mit einem entsprechenden Zündmittel in wenigen Sekunden auf bis zu 2400°C erhitzen kann. Bereits eine kleine Menge an Thermit ® reicht aus, um einen Formkörper aufzuschmelzen, so daß das flüssige Metall mit dem Treibmittel unter Bildung des Metallschaums reagiert. Bei dem Zündmittel handelt es sich um allgemein bekannte Zündmittel wie Zündstäbe, die beispielsweise zur Zündung von Thermit ® verwendet werden.

Bei einer weiteren Ausführungsform wird zur Herstellung der zuvor genannten Verstärkung aus Metallschaum ein Formling verwendet. Der Formling weist erfindungsgemäß Zink oder wenigstens eine Zink-Legierung als Metall in fester Form sowie ein Treibmittel, insbesondere in Form von Metallhydrid, vorzugsweise Titanhydrid, Magnesiumhydrid und/oder Zirkoniumhydrid mit einem Anteil von größer 0,5 Gew.-% auf und ist zum Einsetzen bzw. Einlegen in den Hohlraum eines Kfz-Bauteils, das zu verstärken ist, vorgesehen.

Vorzugsweise ist bei dem zuvor genannten Formling vorgesehen, daß dieser nicht nur das Metall und das Treibmittel, sondern auch ein Schmelzmittel und ein Zündmittel für das Schmelzmittel aufweist. Bei dem Schmelzmittel handelt es sich vorzugsweise um eine Zusammensetzung aus Aluminium und Metalloxiden, um nach Zündung hohe Temperaturen zu erreichen und dadurch den Formling aufzuschmelzen. Bevorzugt wird Thermit ® verwendet. Der Formling wird somit also unter Zuhilfenahme des Goldschmit-Verfahrens aufgeschmolzen. Zur Zündung des Schmelzmittels können alle üblichen Zündmittel verwendet werden, insbesondere solche, die sich zur Zündung von Thermit ® eignen.

Grundsätzlich ist es möglich, den Formling mit seinen zuvor genannten Komponenten, die jedenfalls zumindest teilweise in Pulverform vorliegen, zu pressen. Um als Massenprodukt hergestellt werden zu können, bietet sich jedoch eine andere Art der Herstellung an. Hierzu wird das Metall zunächst zu einem Blech gewalzt. Das Blech wird dann zumindest teilweise mit dem Treibmittel beschichtet und anschließend wird der Formling gerollt, insbesondere spiralgerollt. Dabei sollte sich eine feste Packung mit einer Packungsdichte von mehr als 80 % ergeben. Nach dem Rollen ist es grundsätzlich möglich, die beiden Enden und die außenliegende Längsnaht gasdicht zu schließen. Die beiden Enden können dabei zusammengequetscht oder verlötet werden, während die Längsnaht gefalzt oder ebenfalls gelötet werden kann. Das Schmelzmittel kann dabei im übrigen auch als Beschichtung aufgebracht werden oder aber als Seele ausgebildet und in den Formling eingerollt sein.

Statt des Einbringens eines Formlings in den Hohlraum und damit der Verflüssigung des Metalls im Hohlraum ist es auch möglich, die Verflüssigung des Metalls außerhalb des Bauteils vorzunehmen. Bei einer Alternative ist vorgesehen, daß das Treibmittel dem Metall außerhalb des Hohlraums zugegeben und dann, unmittelbar nach der Zugabe des Treibmittels zum Metall, direkt in den Hohlraum als sich ggf. gerade bildender Metallschaum eingebracht wird. Der nach dem Einbringen des Treibmittels in das Metall entstehende Metallschaum wird bei dieser Variante direkt in den Hohlraum eingeschäumt und erstarrt dort. Diese Art des Einbringens erfordert nur eine geringe Anzahl von Arbeitsschritten und ist am Bauteil selbst leicht durchzuführen.

Alternativ ist es auch möglich, daß das Metall in flüssiger Form und gleichzeitig oder wenige Sekunden später das Treibmittel - getrennt vom Metall - in den Hohlraum eingebracht werden. Bei dieser Impf- bzw. Injektionsbehandlung entsteht der Metallschaum erst im Hohlraum selbst, der dann ebenfalls dort erstarrt. Bei beiden Alternativen ist es so, daß der Hohlraum des Bauteils innerhalb weniger Sekunden nach dem Einbringungsvorgang mit Metallschaum gefüllt ist. Der gesamte Einbringungsvorgang dauert also nur sehr kurze Zeit.

Außerdem ist es möglich, das Treibmittel vor dem Einbringen des Metalls in den Hohlraum einzubringen. Hierbei sind grundsätzlich verschiedene Verfahren möglich. Beim sogenannten Sandwich-Verfahren befindet sich das Treibmittel in einer vorzugsweise aus dem jeweiligen Metall bestehenden Box. Diese wird vom in den Hohlraum einströmenden Metall aufgeschmolzen, so daß das Treibmittel zur Schaumbildung freigegeben wird. Außerdem ist es möglich, das Treibmittel in Tablettenform in den Hohlraum des Bauteils einzugeben, bevor das Metall in den Hohlraum eingebracht wird. Weiterhin ist es möglich, in den Hohlraum des Bauteils einen aus dem betreffenden Metall und dem Treibmittel bestehenden Formkörper einzulegen. Dieser Formkörper gibt beim Einbringen des flüssigen Metalls das Treibmittel frei und wird in übrigen jedenfalls angeschmolzen. Darüber hinaus dient der Formkörper dazu, Wärmeenergie aus dem flüssigen Metall aufzunehmen, so daß keine zu starke Erhitzung des Bauteils beim Einbringen des Metalls auftritt. Des weiteren kann das Treibmittel in Form von Injektionsdraht und/oder vorzugsweise mit dem betreffenden Metall ummantelten Injektionsstücken zu jedem Verfahrenszeitpunkt dem flüssigen Metall zugegeben werden.

Herstellungstechnisch erfolgt das Einbringen des Metallschaums derart, daß zunächst das Bauteil in ein erstes Formteil einer Form eingelegt wird. Anschließend werden die Form und auch der Hohlraum über wenigstens ein zweites Formteil geschlossen, so daß dann der Metallschaum bzw. das Metall und das Treibmittel über wenigstens eine Einfüllöffnung in die geschlossene Form bzw. den geschlossenen Hohlraum eingebracht werden können. Alternativ kann das Treibmittel auch vorab in den Hohlraum eingebracht werden, wie dies zuvor beschrieben worden ist.

Bauteile der eingangs genannten Art weisen in der Regel Öffnungen auf, die in den Hohlraum münden. Derartige Öffnungen im Bauteil werden durch die zuvor genannte Form zumindest im wesentlichen abgedichtet, so daß der Metallschaum beim Einbringen nicht aus dem Hohlraum bzw. dem Bauteil herausschäumt.

Um zu verhindern, daß sich die Bauteile beim Einbringen des flüssigen Metallschaums in den Hohlraum bzw. bei der Reaktion und beim Aufschäumen des Formlings im Hohlraum zu stark erhitzen, und dabei möglicherweise bestimmte Festigkeitseigenschaften verlieren, ist bei einer vorteilhaften Ausgestaltung der Erfindung vorgesehen, daß die Form bzw. das Bauteil zumindest teilweise gekühlt wird. Allerdings ist festgestellt worden, daß es bei Verwendung von Zink grundsätzlich auch möglich ist, ohne eine Kühlung der Form zu arbeiten. Sobald nämlich das Zink bzw. der Zinkschaum in flüssiger Form in das Bauteil eingebracht bzw. eingeschäumt wird, ergibt sich sofort eine Temperaturverminderung und ein zum Bauteil hin abnehmender Temperaturgradient.

Grundsätzlich ist es aber auch möglich, in den Hohlraum des Bauteils zunächst einen aus Metallschaum bestehenden Formkörper einzulegen. Dieser Formkörper ist zuvor bereits hergestellt worden. Der Formkörper hat solche Abmaße, daß zwischen der Wandung des Kfz-Bauteils und dem Formkörper ein hinreichender Freiraum vorhanden ist, in den Metallschaum bzw. Metall einfließen kann. Zur Offenhaltung des Freiraums sind entsprechende Abstandshalter vorgesehen, die auch am Formkörper selbst ausgebildet sein können. Um dabei eine gute Verbindung zwischen dem in den Freiraum eingebrachten Metallschaum und dem Formkörper sowie dem Kfz-Bauteil an sich zu erzielen, sollten am Formkörper und am Kfz-Bauteil Hinterschneidungen und/oder korrespondierende Eingriffsabschnitte o. dgl. vorgesehen sein, so daß sich nach dem Erstarren des in den Freiraum eingebrachten Metallschaums eine feste Verbindung ergibt, ist jedoch optional.

Um die Gefahr des Verzuges des Bauteils bei Erhitzung zum Aufschmelzen des Metalls weiter zu verringern, ist es von Vorteil, wenn das Bauteil während des Aufschmelzens des Metalls und/oder der Bildung des Metallschaums zumindest teilweise von außen gekühlt wird. Die Kühlung (unter-halb der Zimmertemperatur) erfolgt dabei in der Regel über eine Form, in die das Bauteil zusammen mit dem Formling eingelegt wird. Aber auch eine unmittelbare Kühlung des Bauteils ist ohne weiteres möglich.

Da der Hohlraum beim Aufschäumen des Metallschaums in der Regel vollständig ausgefüllt wird, bietet es sich an, in den Hohlraum vor dem Aufschmelzen des Metalls wenigstens ein nicht aufschmelzendes Leerrohr einzulegen, durch das dann bedarfsweise Kabel hindurchgeführt werden können.

Um die geforderte Qualität der Verstärkung in dem Hohlraum des Bauteils stets gewährleisten zu können, ist bei einer weiteren bevorzugten Ausfiihrungsform der Erfindung vorgesehen, daß nach dem Aufschäumen und Erstarren die Porenstruktur des Metallschaums überprüft wird. Diese Messung der Porenstruktur, die beispielsweise über einen Druckabfall ermittelt werden kann, kann unabhängig davon erfolgen, ob das Metall in fester Form mit dem Formling in den Hohlraum eingebracht worden ist oder aber ob das Metall oder der Metallschaum in flüssiger Form in den Hohlraum eingebracht worden ist.

Nachfolgend werden Ausführungsbeispiele der Erfindung anhand der Zeichnung erläutert. Es zeigt
- Fig. 1: eine Seitenansicht eines teilweise dargestellten Kraftfahrzeugs mit einer erfmdungsgemäß verstärkten A-Säule,
- Fig. 2: eine Querschnittsansicht der A-Säule aus Fig. 1 entlang der Schnittlinie II - II aus Fig. 1,
- Fig. 3: eine schematische Darstellung eines Verfahrensschrittes bei der Herstellung eines Formlings,
- Fig.4: eine perspektivische Ansicht eines spiralgerollten, endseitig noch nicht abgeschlossenen Formlings,
- Fig. 5: eine Ansicht eines fertiggestellten Formlings,
- Fig. 6: eine Querschnittsansicht eines weiteren Formlings,
- Fig. 7: eine perspektivische Ansicht eines noch nicht vollständig zusammengerollten Formlings,
- Fig. 8: eine Schnittansicht eines Teils des Formlings aus Fig. 7 und
- Fig. 9: eine schematische Darstellung einer erfindungsgemäßen Trägerstruktur.

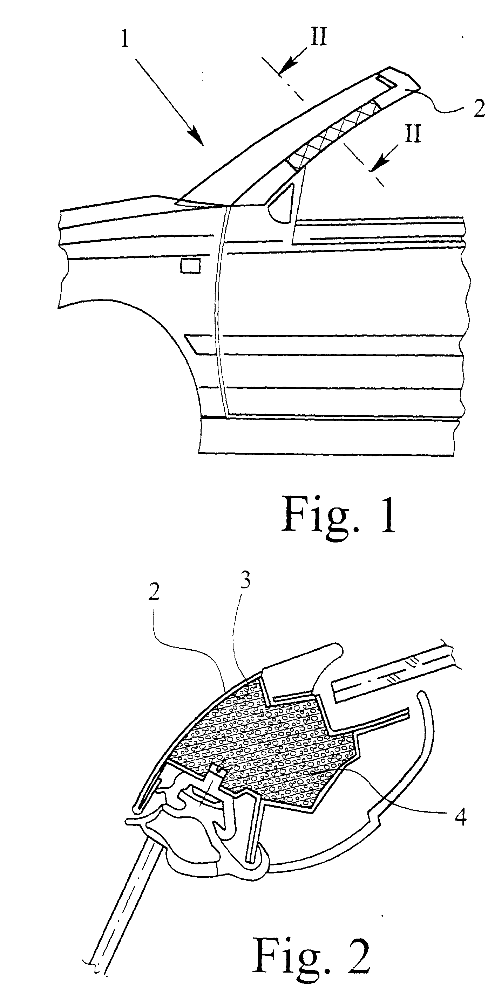

In Fig. 1 ist ein Teil eines Kraftfahrzeugs 1 dargestellt, wobei es sich um einen Personenkraftwagen handelt. Die Karosserie des Kraftfahrzeugs 1 besteht aus einer Reihe von Bauteilen wie verschiedenen Säulen, Trägern, Holmen und Rahmenteilen. In Fig. 1 ist als Bauteil eine A-Säule 2 dargestellt. Wie sich aus Fig. 2 ergibt, weist die A-Säule 2 einen Hohlraum 3 auf, der mit Metallschaum 4 ausgeschäumt ist. Der Metallschaum 4 bildet dabei eine Verstärkung in dem Hohlraum 3, die zur Erhöhung der Knicksteifigkeit, der Energieaufnahme und zur Gewichtsreduzierung des verstärkten Bauteils dient.

Wesentlich ist nun, daß es sich bei dem Metall des Metallschaums um Zink oder eine Zink-Legierung handelt. Zur Herstellung des Metallschaums ist ein Metallhydrid als Treibmittel 7 verwendet worden.

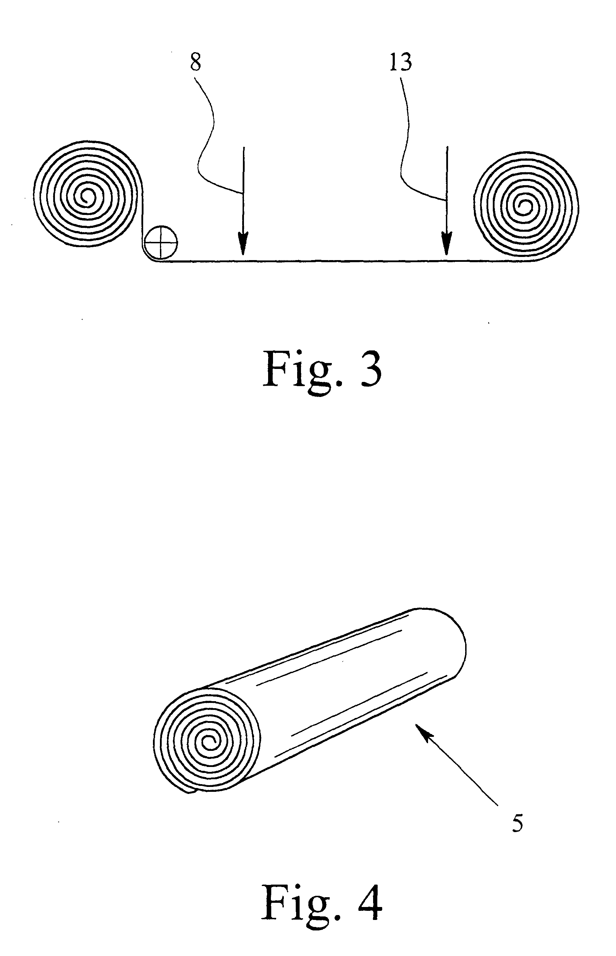

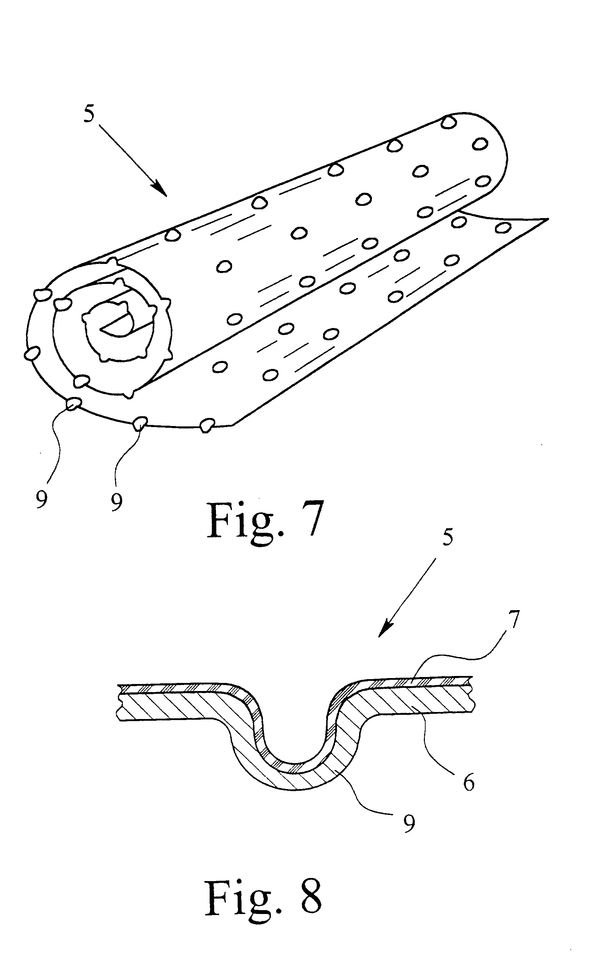

Die in Fig. 2 dargestellte Verstärkung in dem Hohlraum 3 ist durch einen Formling hergestellt worden, wie er in den Fig. 4 bis 6 dargestellt ist. Der Formling 5 besteht aus einem gewalzten Blech 6, das, wie sich aus den Fig. 4 und 7 ergibt, spiralgerollt ist. Das Blech 6 kann, wie sich aus Fig. 3 ergibt, mit dem Treibmittel 7 beschichtet werden. Dies ist durch den Pfeil 8 in Fig. 3 dargestellt. Bei der in den Fig. 3 bis 6 dargestellten Ausführungsform ergibt sich nach dem Rollen des Formkörpers 5 eine relativ hohe Packungsdichte. Hiervon unterscheidet sich die in den Fig. 7 und 8 dargestellte Ausführungsform, wobei am Blech 6 Vorsprünge 9 vorgesehen sind, die nach außen weisen, so daß der Formling 5, wenn er in den Hohlraum 3 eingelegt ist, von der Wandung des Bauteils über die Vorsprünge 9 beabstandet ist. Auch sind die eingerollten Blechbereiche über die Vorsprünge 9 beabstandet, so daß die Oberfläche des eingerollten Formlings 5 relativ groß ist. Es kann aber auch vorgesehen sein, daß sich Vorsprünge 9 lediglich an der Außenseite des Formlings 5 befinden, nicht jedoch an den inneren eingerollten Bereichen. Mit Ausnahme der Vorsprünge 9 unterscheiden sich die Ausführungsformen gemäß Fig. 4 und Fig. 7 nicht.

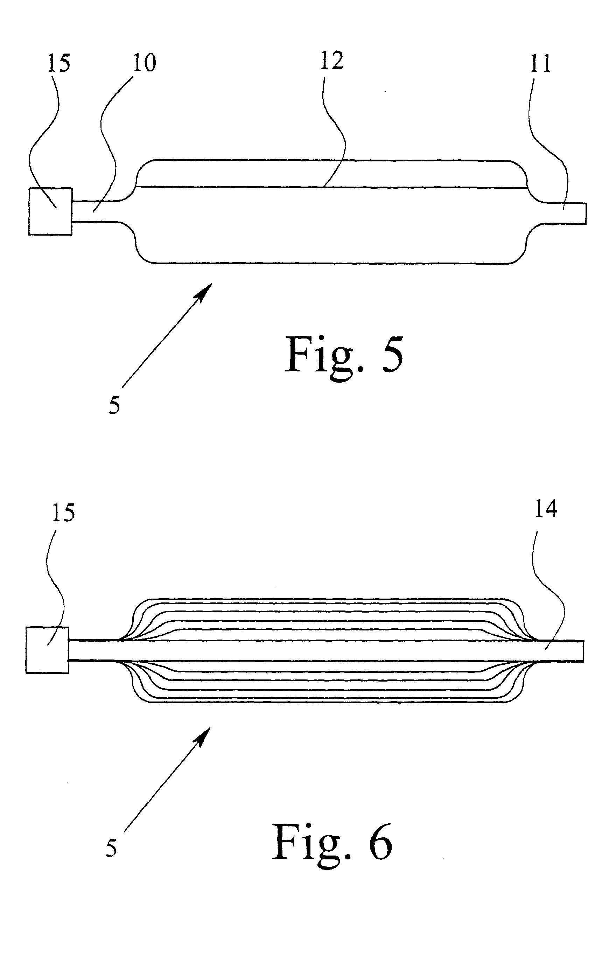

Nach dem Rollen des in Fig. 4 dargestellten Formlings 5 werden die beiden Enden 10, 11 des Formlings 5 und die außenliegende Längsnaht 12 gasdicht geschlossen. Bei der in Fig. 5 dargestellten Ausführungsform sind die beiden Enden 10, 11 flachgepreßt und verlötet. Auch die Längsnaht 12 ist verlötet. Zusätzlich zur Beschichtung mit dem Treibmittel 7 kann auf das Treibmittel ein Schmelzmittel als Beschichtung aufgebracht werden. Im einzelnen ist dies nicht dargestellt. Lediglich die Aufbringung an sich ist durch den Pfeil 13 in Fig. 3 dargestellt. Das Schmelzmittel selbst besteht aus Eisenoxid und Aluminium. Statt als Beschichtung, wie dies in Fig. 3 durch den Pfeil 13 angedeutet ist, kann das Schmelzmittel auch als Seele 14 ausgebildet und in den Formling 5 mit eingerollt sein. Dies ist in Fig. 6 dargestellt. Zur Zündung des Schmelzmittels dient ein Zündmittel 15, der mit dem Schmelzmittel verbunden ist. Das Zündmittel 15 kann an beiden Enden 10, 11 oder auch nur an einem Ende vorgesehen sein.

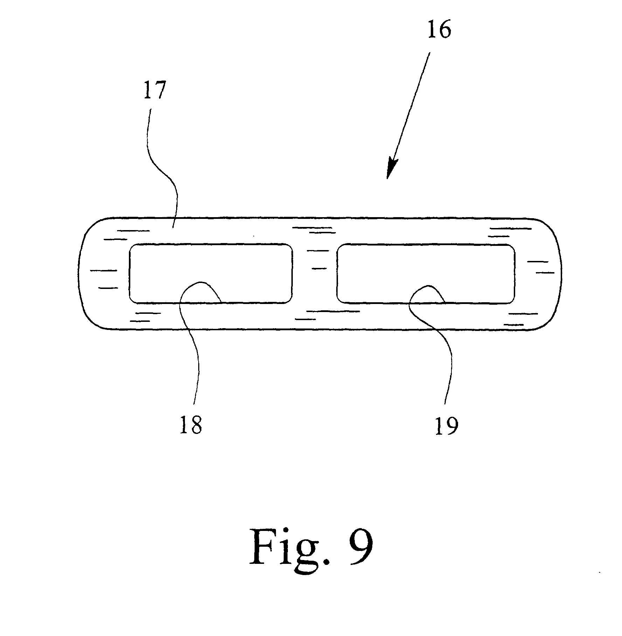

In Fig. 9 ist eine als Schalttafel ausgebildete Trägerstruktur 16 dargestellt. Die Trägerstruktur 16 weist einen Grundkörper 17 auf, auf den zumindest bereichsweise eine nicht dargestellte Beschichtung, die insbesondere aus Kunststoff besteht, aufgebracht ist. In der Trägerstruktur 16 befinden sich Öffnungen 18, 19. Die Öffnung 18 ist dabei zur Anordnung von Armaturen vorgesehen, während die Öffnung 19 zur Anordnung eines Handschuhfachs dient.

Der Grundkörper 17 der Trägerstruktur 16 kann ohne weiteres in der Art und Weise hergestellt werden, wie dies zuvor bezüglich der Verstärkung des Kfz-Bauteils beschrieben worden ist.

Grundsätzlich ist es möglich, daß der Metallschaum zumindest im wesentlichen offenzellig oder aber geschlossenzellig ausgebildet ist. Bei Verwendung des Metallschaums als Verstärkung bei einem Kfz-Bauteil sollte die Offenzelligkeit, d. h. die Größe der einzelnen Zellen, derart sein, daß Tauchgrund aus dem Schaum wieder abfließen kann oder aber erst gar nicht in den Metallschaum eindringt. Um von vornherein zu verhindern, daß der Tauchgrund beim Eintauchen des Bauteils in den Schaum eindringt, könnte auch entweder ein geschlossenzelliger Metallschaum verwendet werden oder aber zumindest der äußere Bereich des Metallschaums im wesentlichen geschlossenzellig ausgebildet sein, so daß sich quasi eine geschlossene Außenhaut ergibt.

Eine derartige Ausbildung läßt sich bei Herstellung des Metallschaums ohne weiteres realisieren.

## Patentansprüche

1. Verfahren zur Herstellung einer Verstärkung in einem Hohlraum (3) eines vorzugsweise verzinkten Kfz-Bauteils, insbesondere einer A-Säule (2), B-Säule, einer C-Säule, einer D-Säule, eines Motorträgers, eines Heckträgers, eines Dachquerträgers, eines Dachholmes, eines Rahmenteils, eines Fahrwerksteils, wobei der Hohlraum (3) mit einem Metallschaum (4) zumindest teilweise ausgeschäumt wird, so daß sich nach dem Erstarren eine aus dem Metallschaum (4) bestehende Verstärkung in dem Hohlraum (3) insbesondere zur Erhöhung der Knicksteifigkeit des Bauteils und/oder der Energieaufnahme des Bauteils und/oder zur Gewichtsreduzierung des Bauteils ergibt, **dadurch gekennzeichnet, daß** als Metall des Metallschaums (4) Zink oder wenigstens eine Zink-Legierung verwendet wird und daß das Metall derart aufgeschäumt wird, daß sich eine Volumenvergrößerung des Metalls zum Metallschaum von wenigstens 1:8 ergibt.

2. Verfahren nach Anspruch 1, **dadurch gekennzeichnet, daß** zur Herstellung des Metallschaums (4) wenigstens ein Treibmittel verwendet wird und daß, vorzugsweise, als Treibmittel wenigstens ein Metallhydrid, insbesondere Titanhydrid, Magnesiumhydrid und/oder Zirkoniumhydrid mit einem Anteil von größer 0, 5 Gew.-% verwendet wird.

3. Verfahren nach Anspruch 2, **dadurch gekennzeichnet, daß** das Metall und das Treibmittel über wenigstens einen gemeinsamen, in fester Form vorliegenden Formling (5) in den Hohlraum (3) eingebracht werden und daß das Metall nach Erhitzen und Aufschmelzen durch Reaktion mit dem Treibmittel den Metallschaum (4) bildet.

4. Verfahren nach einem der vorhergehenden Ansprüche, **dadurch gekennzeichnet, daß** ein Formling in den Hohlraum (3) eingebracht wird und die Energie zum Aufschmelzen des Formlings (5) nicht über oder durch Material des Bauteils zugeführt wird, und daß zum Aufschmelzen des Formlings (5) ein Schmelzmittel verwendet wird, das über ein Zündmittel (15) gezündet wird, wobei das Schmelzmittel und das Zündmittel (15) über den gemeinsamen Formling (5) in den Hohlraum (3) eingebracht werden.

5. Verfahren nach Anspruch 1 oder 2, **dadurch gekennzeichnet, daß** das Metall in flüssiger Form und das Treibmittel außerhalb des Hohlraums (3) zusammengegeben werden, wobei das Metall unmittelbar nach der Zugabe des Treibmittels zum Metall in den Hohlraum (3) eingebracht wird, oder daß das Metall in flüssiger Form in den Hohlraum (3) eingebracht wird und das Treibmittel gleichzeitig oder wenige Sekunden später - getrennt vom Metall - in den Hohlraum (3) eingebracht wird oder bereits vor dem Einbringen des Metalls in den Hohlraum (3) eingebracht worden ist.

6. Verfahren nach einem der vorhergehenden Ansprüche, **dadurch gekennzeichnet, daß** das Bauteil in ein erstes Formteil einer Form eingelegt wird, daß die Form nach dem Einlegen des Bauteils durch wenigstens ein zweites Formteil geschlossen wird, daß der Metallschaum bzw. das Metall über wenigstens eine Einfüllöffnung der geschlossenen Form in den Hohlraum eingebracht wird, wobei etwaige Öffnungen im Bauteil durch die Form zumindest im wesentlichen abgedichtet werden.

7. Verfahren nach einem der vorhergehenden Ansprüche, **dadurch gekennzeichnet, daß** das Bauteil während des Aufschmelzens des Metalls und/oder der Bildung des Metallschaums (4) zumindest teilweise von außen gekühlt wird, daß, vorzugsweise, in den Hohlraum (3) vor dem Aufschmelzen des Metalls wenigstens ein Leerrohr eingelegt wird und daß, vorzugsweise, die Porenstruktur des Metallschaums (4) nach dessen Erstarrung überprüft wird.

8. Verfahren nach einem der vorhergehenden Ansprüche, **dadurch gekennzeichnet, daß** der Formling (5) Zink oder wenigstens eine Zink-Legierung als Metall in fester Form sowie ein Treibmittel, insbesondere in Form von Metallhydrid, vorzugsweise Titanhydrid, Magnesiumhydrid und/oder Zirkoniumhydrid mit einem Anteil von größer 0, 5 Gew.-%, aufweist.

9. Verfahren nach Anspruch 8, **dadurch gekennzeichnet, daß** der Formling (5) ein Schmelzmittel, insbesondere auf der Basis von Thermit ®, und ein Zündmittel (15) für das Schmelzmittel aufweist.

10. Verfahren nach Anspruch 8 oder 9, **dadurch gekennzeichnet, daß** Zink als Metall zu einem Blech (6) gewalzt wird, daß das Blech (6) zumindest teilweise mit dem Treibmittel (7) beschichtet wird und vorzugsweise gerollt, insbesondere spiralgerollt, wird und daß, vorzugsweise, das Metall zumindest teilweise mit dem Schmelzmittel beschichtet ist und/oder daß das Schmelzmittel als Seele (14) ausgebildet und in den Formling (5) eingerollt ist.

11. Trägerstruktur (16) wie Schalttafel, Radioträger, Tür-Innenverkleidungsbauteil, Verstärkung für eine Haube oder Heckklappe, Sitzbauteil für ein Kfz-Bauteil, mit einem Grundkörper (17) aus einem Metallschaum aus Zink oder einer Zink-Legierung, wobei der Grundkörper (17) nicht in einen Hohlraum des Kfz-Bauteils eingeschäumt ist, **dadurch gekennzeichnet, daß** das Metall mit einer Volumenvergrößerung zum Metallschaum von wenigstens 1:8 aufgeschäumt ist.

12. Trägerstruktur nach Anspruch 11, **dadurch gekennzeichnet, daß** wenigstens eine zumindest bereichsweise auf den Grundkörper (17) aufgebrachte, insbesondere aus Kunststoff bestehende Beschichtung vorgesehen ist und daß, vorzugsweise, in der Trägerstruktur wenigstens eine Öffnung (18, 19), insbesondere zum Einsetzen wenigstens einer Armatur, vorgesehen ist.

## Claims

1. Method for the production of a reinforcement in a hollow space (3) of a preferably galvanized motor vehicle component, especially an A-pillar (2), B-pillar, a C-pillar, a D-pillar, an engine support, a rear support, a roof cross support, a roof beam, a part of the frame, a part of the chassis, wherein the hollow space (3) is at least partially filled with a metallic foam (4), so that after the hardening of the reinforcement consisting of the metallic foam (4), a reinforcement results, especially for an increase of the strain resistance of the component and/or the energy absorption of the component and/or for the reduction of weight, **characterized in that** the metal used for the metallic foam (4) is zinc or at least a zinc alloy and that the metal is sprayed on is such a manner that an increase in volume of at least 1:8 of metal to metallic foam results.

2. Method according to claim 1, **characterized in that** at least one propellant is used for the production of the metallic foam (4) and that, preferably, at least one metal hydride is used as a propellant, especially titanium hydride, magnesium hydride and/or zirconium hydride with a percent by weight larger than 0.5 %.

3. Method according to claim 2, **characterized in that** the metal and the propellant are introduced into the hollow space (3) via at least one common, present formed body (5) in its solid state and that the metal forms the metallic foam (4) after being heated and melted via a reaction with the propellant.

4. Method according to any one of the preceding claims, **characterized in that** a formed body is introduced into the hollow space (3) and the energy for melting the formed body (5) is not supplied over or through the material of the component and that a flux is used for melting the formed body (5) which is ignited by an ignitor (15), wherein the flux and the ignitor (15) are inserted into the hollow space (3) via the common formed body (5).

5. Method according to claims 1 or 2, **characterized in that** the metal in its liquid state and the propellant are mixed together outside of the hollow space (3), wherein the metal is introduced immediately after the addition of the propellant to the metal in the hollow space (3), or that the metal in its liquid state is introduced into the hollow space (3) and the propellant is introduced into the hollow space (3) at the same time or a few seconds later - separately from the metal - or has already been introduced into the hollow space (3) before the introduction of the metal.

6. Method according to any one of the preceding claims, **characterized in that** the component is inserted in a first part of the mold, that after the insertion of the component via at least a second part of a mold, the mold is closed, that the metallic foam or, respectively, the metal is filled into the hollow space via at least one fill opening of the closed mold, wherein some openings in the component are substantially sealed by the mold.

7. Method according to any one of the preceding claims, **characterized in that** during the melting of the metal and/or formation of the metallic foam (4), the component is cooled, at least partially, from the outside, that, preferably, before the melting of the metal, at least one empty pipe is inserted into the hollow space (3) and that, preferably, the pore structure of the metallic foam (4) is checked after its hardening.

8. Method according to any one of the preceding claims, **characterized in that** the formed body (5) has metal in solid state that is zinc or at least a zinc alloy and has a propellant, in particular, in the form of a metal hydride, preferably titanium hydride, magnesium hydride and/or zirconium hydride with a percentage of weight greater than 0.5%.

9. Method according to claim 8, **characterized in that** the formed body (5) has a flux, especially having a base of Thermit ® and an ignitor (15) for the flux.

10. Method according to claim 8 or 9, **characterized in that** zinc as the metal is rolled to form a sheet (6), that the sheet (6) is at least partially coated with the propellant (7) and preferably rolled up, especially spirally-rolled up and that, preferably, the metal is at least partially coated with the flux and/or that the flux is formed as a core (14) and is rolled into the formed body (5).

11. Carrier structure (16) such as a switchboard, radio carrier, interior panel assembly for a door, reinforcement for a hood or tail gate, seat component or the like for a motor vehicle component having a body (17) made of metallic foam of zinc or a zinc alloy, wherein the body (17) is not sprayed into the hollow space of a motor vehicle component, **characterized in that** the metal is sprayed with an increase in volume to metallic foam of at least 1:8.

12. Carrier structure according to any one of claims 11 to 13, **characterized in that** at least one applied coating is provided on at least one area of the body (17), especially a coating consisting of plastic and that, preferably, at least one opening (18, 19) is provided in the carrier structure, especially for insertion of at least one mounting.

## Revendications

1. Procédé pour la fabrication d'un renfort dans une cavité (3) d'une pièce de construction automobile de préférence zinguée, en particulier d'une colonne A (2), d'une colonne B, d'une colonne C, d'une colonne D, d'un support de moteur, d'un support de hayon, d'une traverse de toit, d'un longeron de toit, d'un cadre, d'un châssis, la cavité (3) étant remplie au moins partiellement de mousse métallique (4), de manière à ce que, après la solidification, on obtienne dans la cavité (3) un renfort consistant en mousse métallique (4), en particulier pour augmenter la résistance à la pliure de la pièce de construction et/ou l'absorption d'énergie de la pièce de construction et/ou réduire le poids de la pièce de construction, **caractérisé en ce qu'**on utilise comme métal de la mousse métallique (4) du zinc ou du moins un alliage de zinc et que le métal est transformé en mousse de manière à obtenir un gonflement de volume du métal à la mousse métallique d'au moins 1 : 8.

2. Procédé selon la revendication 1, **caractérisé en ce que**, pour la fabrication de la mousse métallique (4), on utilise au moins un agent moteur et que, de préférence, on utilise comme agent moteur au moins un hydride de métal, en particulier de l'hydride de titane, de l'hydride de magnésium et/ou de l'hydride de zirconium avec un pourcentage supérieur à 0,5 % en poids.

3. Procédé selon la revendication 2, **caractérisé en ce que** le métal et l'agent moteur sont introduits dans la cavité (3) grâce à au moins une forme (5) commune à l'état solide et que le métal, après chauffe et fusion, forme la mousse métallique (4) par réaction avec l'agent moteur.

4. Procédé selon une des revendications précédentes, **caractérisé en ce qu'**une forme est déposée dans la cavité (3) et que l'énergie pour la fusion sur la forme (5) n'est pas acheminée sur ou à travers la matière de la pièce de construction, et que pour la fusion sur la forme (5), on utilise un fondant qui est allumé par un agent d'allumage (15), le fondant et l'agent d'allumage (15) étant introduits dans la cavité (3) sur la forme commune (5).

5. Procédé selon la revendication 1 ou 2, **caractérisé en ce que** le métal à l'état liquide et l'agent moteur sont ajoutés ensemble à l'extérieur de la cavité (3), le métal étant introduit immédiatement dans la cavité (3) après l'ajout de l'agent moteur au métal ou que le métal à l'état liquide est introduit dans la cavité (3) et que l'agent moteur est introduit dans la cavité (3) simultanément ou quelques secondes plus tard -séparément du métal- ou a déjà été introduit dans la cavité (3) avant l'introduction du métal.

6. Procédé selon une des revendications précédentes, **caractérisé en ce que** la pièce de construction est posée dans une première pièce d'un moule, que le moule, après insertion de la pièce de construction, est fermé par au moins une deuxième pièce de moule, que la mousse métallique ou le métal est introduit dans la cavité par au moins une ouverture de remplissage du moule fermé, les ouvertures éventuelles de la pièce de construction étant obturées du moins globalement par le moule.

7. Procédé selon une des revendications précédentes, **caractérisé en ce que** la pièce de construction est refroidie au moins partiellement de l'extérieur pendant la coulée du métal et/ou la formation de la mousse métallique (4), que, de préférence, au moins un tube vide est inséré dans la cavité (3) avant la coulée du métal et que, de préférence, la structure poreuse de la mousse métallique (4) est contrôlée après sa solidification.

8. Procédé selon une des revendications précédentes, **caractérisé en ce que** la forme (5) comporte du zinc ou du moins un alliage de zinc comme métal à l'état solide ainsi qu'un agent moteur, en particulier sous forme d'un hydride de métal, de préférence de l'hydride de titane, de l'hydride de magnésium et/ou de l'hydride de zirconium avec un pourcentage supérieur à 0,5 % en poids.

9. Procédé selon la revendication 8, **caractérisé en ce que** la forme (5) comporte un fondant, en particulier à base de Thermit ® et un agent d'allumage (15) pour le fondant.

10. Procédé selon la revendication 8 ou 9, **caractérisé en ce que** du zinc est laminé pour former une tôle (6), que la tôle (6) est enrobée au moins partiellement avec l'agent moteur (7) et de préférence enroulée, en particulier enroulée en spirale, et que, de préférence, le métal est au moins partiellement enrobé avec le fondant et que le fondant est conçu comme un noyau (14) et est roulé dans la forme (5).

11. Structure porteuse (16) comme tableau de bord, support de radio, pièce d'habillage intérieur, renfort pour capot ou hayon, pièce de siège pour une pièce de construction automobile, avec un corps de base (17) en mousse métallique de zinc ou alliage de zinc, le corps de base (17) n'étant pas transformé en mousse dans une cavité de la pièce de construction, **caractérisée en ce que** le métal est transformé en mousse métallique avec un gonflement de volume d'au moins 1 : 8.

12. Structure porteuse selon la revendication 11, **caractérisé en ce qu'**au moins un enrobage appliqué du moins par endroits sur le corps de base (17), à base particulièrement de plastique, est prévu et que, de préférence, au moins une ouverture (18, 19) est prévue dans la structure porteuse, en particulier pour la mise en place d'au moins une armature.
